(19) Europäisches Patentamt
European Patent Office
Office européen des brevets

(11) **EP 4 158 924 B1**

(12) **FASCICULE DE BREVET EUROPEEN**

(45) Date de publication et mention de la délivrance du brevet:
**06.11.2024 Bulletin 2024/45**

(21) Numéro de dépôt: **21734188.2**

(22) Date de dépôt: **21.05.2021**

(51) Classification Internationale des Brevets (IPC):
***H04W 8/16*** *(2009.01)*

(52) Classification Coopérative des Brevets (CPC):
**H04W 8/16; H04W 12/03; H04W 12/108; H04W 12/63;** H04W 8/02

(86) Numéro de dépôt international:
**PCT/FR2021/050936**

(87) Numéro de publication internationale:
**WO 2021/240103 (02.12.2021 Gazette 2021/48)**

(54) **REGROUPEMENT DE TRAJECTOIRES DANS LE DOMAINE CHIFFRÉ**

GRUPPIERUNG VON TRAJEKTORIEN IN DER VERSCHLÜSSELTEN DOMÄNE

GROUPING OF TRAJECTORIES IN THE ENCRYPTED DOMAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2020 FR 2005728**

(43) Date de publication de la demande:
**05.04.2023 Bulletin 2023/14**

(73) Titulaire: **Orange**
**92130 Issy-les-Moulineaux (FR)**

(72) Inventeurs:
• **CANARD, Sébastien**
**92326 CHÂTILLON CEDEX (FR)**
• **LE HELLO, Dominique**
**92326 CHÂTILLON CEDEX (FR)**
• **VIALLA, Bastien**
**92326 CHÂTILLON CEDEX (FR)**
• **EL MOUSSAWI, Adnan**
**92326 CHÂTILLON CEDEX (FR)**
• **DURPOIX ESPINASSON, Quentin**
**92326 CHÂTILLON CEDEX (FR)**

(74) Mandataire: **Plasseraud IP**
**104 Rue de Richelieu**
**CS92104**
**75080 Paris Cedex 02 (FR)**

(56) Documents cités:
**EP-A1- 3 640 946**

• **LI WEI ET AL: "Incentive Mechanism Design for Crowdsourcing-Based Indoor Localization", IEEE ACCESS, vol. 6, 10 September 2018 (2018-09-10), pages 54042 - 54051, XP011692954, DOI: 10.1109/ACCESS.2018.2869202**

**Description**

La présente invention concerne le domaine de l'analyse et du traitement informatique des données relatives à des trajectoires géographiques, par exemple, le traitement des données relevées par des assistants de navigation GPS.

Elle trouve notamment des applications dans les systèmes informatiques comparant ces données relatives à ces trajectoires géographiques.

En effet, les assistants de navigation GPS peuvent être amenés à comparer les trajectoires de leurs utilisateurs afin d'adapter les parcours recommandés.

De plus, l'analyse des données relatives à des trajectoires géographiques, en permettant de déterminer les parcours les plus empruntés, offre la possibilité d'adapter ces parcours, par exemple, la signalétique ou encore les services proposés sur ces parcours.

Toutefois, les données relatives à des trajectoires géographiques sont des données sensibles, car elles permettent très souvent d'identifier les individus qui ont parcouru ces trajectoires. Le respect de la « vie privée » des utilisateurs d'un service informatique étant un enjeu de plus en plus stratégique, il est important de pouvoir analyser les données relatives à des trajectoires géographiques sans compromettre l'identité de ces utilisateurs.

Certaines solutions se basent sur l'anonymisation des trajectoires. Ainsi une trajectoire donnée n'est plus associée avec un élément permettant l'identification de l'utilisateur.

Toutefois, une trajectoire peut contenir en elle-même suffisamment d'information pour identifier un utilisateur. En effet, une trajectoire d'un utilisateur, notamment lorsque celle-ci est relative au déplacement d'un utilisateur sur plusieurs jours, peut permettre de déterminer des lieux significatifs de la vie de l'utilisateur, par exemple, son lieu de travail ou encore son lieu d'habitation. Une trajectoire d'un utilisateur, en ce qu'elle permet de connaitre la vitesse de celui-ci, peut également permettre d'approximer la taille ou l'âge de l'utilisateur. Ainsi, l'anonymisation des trajectoires n'offre pas une protection suffisante de l'identité des utilisateurs d'un service utilisant des données relatives à leurs trajectoires géographiques. EP3640946A1 divulgue un procédé de sélection de cellules cibles parmi une pluralité de cellules candidates, dans le cadre d'un processus thérapeutique, par exemple pour la fabrication d'un médicament.

La publication "Incentive Mechanism Design for Crowdsourcing-based Indoor Localization", IEEE ACCESS, Li Wei et Al. divulgue des modélisations de mécanismes d'incitation au crowdsourcing afin d'améliorer la précision de la géolocalisation en intérieur, basée sur des empreintes RSSI et des paramètres de protection de données.

L'invention est définie par les revendications indépendantes. Les modes de réalisation sont définis par les revendications dépendantes. La présente invention vient améliorer la situation.

Un premier aspect de l'invention concerne une méthode de comparaison d'une première trajectoire T avec une deuxième trajectoire T', les trajectoires T et T' étant au moins pour partie incluses dans une zone géographique, la zone géographique étant recouverte par un ensemble de cellules, la méthode étant mise en oeuvre par un ordinateur et comprenant:

- une détermination d'un premier vecteur signature, Sig(EV), déterminé par application d'une fonction, f, de hachage sur un vecteur chiffré, EV, de sorte qu'au moins une k-ième composante du premier vecteur signature correspond au chiffré de la composante minimale d'un vecteur résultant du produit d'un vecteur V et d'un vecteur résultant de l'application sur un vecteur $W = (W_m)_{m \in [1;n]}$ d'une k-ième permutation comprise dans un sous-ensemble de h éléments de l'ensemble des permutations de n valeurs, où $W_m$ est égale à m et le vecteur chiffré, EV, étant le résultat du chiffrement du vecteur V représentant la trajectoire T, la i-ème composante $V_i$ du vecteur $V = (V_i)_{i \in [1,n]}$ étant :

  - de valeur réelle $\alpha$ strictement positive, lorsque la trajectoire T comprend une i-ème transition d'un ensemble de n transitions, chaque transition de l'ensemble de transitions représentant une transition d'une cellule de la zone géographique à une autre cellule de la zone géographique ;
  - de valeur réelle $\beta$ strictement positive avec $n.\alpha < \beta$, lorsque la trajectoire T ne comprend pas la i-ème transition de l'ensemble de transitions ;

- une comparaison de Sig(EV) avec un deuxième vecteur signature Sig(EV'), la comparaison comprenant l'application d'une fonction D qui, à deux vecteurs EU et EU' associe une valeur chiffrée de d(U,U'), où U et U' sont deux vecteurs et EU et EU' sont respectivement les vecteurs chiffrés de U et U' et d est une distance, le deuxième vecteur signature Sig(EV') correspondant à la deuxième trajectoire T'.

Ainsi, sur la base de données chiffrées, à savoir le vecteur chiffré EV, obtenues à partir de données (à savoir le vecteur V) représentant une première trajectoire T, une comparaison entre la première trajectoire et la deuxième trajectoire est effectuée, plus précisément une comparaison entre les données représentant la première trajectoire T et les données représentant la deuxième trajectoire. La méthode proposée permet de réaliser une telle comparaison de manière plus efficiente, c'est-à-dire en consommant moins de ressources de calcul tout en assurant une protection importante de l'identité de l'utilisateur à l'origine de la première trajectoire T.

En effet, la fonction de hachage telle que définie dans la méthode en combinaison avec la structure particulière du vecteur V permet d'obtenir un premier vecteur signature, Sig(EV), dont les composantes sont indépendantes des trajectoires qui ne sont pas comprises dans la trajectoire T. Autrement dit, le résultat de la fonction de hachage ne tient pas compte des composantes de valeur réelle $\beta$, mais uniquement des composantes de valeur réelle $\alpha$. La fonction de hachage filtre ainsi les composantes pertinentes. Etant donné que la précision de la comparaison dépend du nombre de composantes dans le premier vecteur signature (c'est-à-dire du nombre de permutations distinctes qui sont utilisées dans le cadre de l'algorithme de type MinHash) et de la pertinence de ces composantes, la différence importante entre les composantes de valeur réelle $\beta$ et les composantes de valeur réelle $\alpha$ permet de simplifier fortement la comparaison qui doit être faite pour calculer les composantes du vecteur signature, tout en conservant la même précision. La complexité de la comparaison est donc réduite.

Ainsi, l'opérateur d'un service requérant l'analyse des données relatives à des trajectoires géographiques peut donc effectuer une comparaison efficiente sans utiliser directement des données, non chiffrées, représentant la première trajectoire. Par exemple, un équipement utilisateur (téléphone, smartphone...) peut chiffrer les données représentant la première trajectoire avant que celles-ci ne soient transmises à l'opérateur du service pour effectuer la comparaison. Ainsi, en l'absence des données non chiffrées représentant la première trajectoire, l'opérateur du service utilisant les données chiffrées ne pourra pas identifier l'individu ayant produit les données représentant la première trajectoire.

Par vecteur signature, il est entendu le vecteur dont les composantes sont le résultat d'une fonction de hachage appliquée respectivement aux composantes d'un autre vecteur. Les composantes de cet autre vecteur pouvant être chiffrées ou non.

La deuxième trajectoire peut être une trajectoire connue de l'ordinateur et de l'opérateur du service opérant l'ordinateur, c'est-à-dire une trajectoire dont les données non chiffrées représentant la trajectoire T' sont connues de l'opérateur du service et de l'ordinateur. Les données représentant la deuxième trajectoire T' sont, par exemple, un vecteur V' défini de la même manière que V, à savoir, que la i-ème composante $V'_i$ du vecteur $V' = (V'_i)_{i \in [1,n]}$ est :

- de valeur réelle $\alpha$ lorsque la trajectoire T' comprend la i-ème transition de l'ensemble de n transitions;
- de valeur réelle $\beta$ lorsque la trajectoire T' ne comprend pas la i-ème transition de l'ensemble de transitions.

Ainsi, les données représentant la deuxième trajectoire sont accessibles à l'opérateur du service ou sont utilisées par l'ordinateur avant qu'elles ne soient chiffrées. Une trajectoire connue peut être une trajectoire générée par l'ordinateur (ou plus généralement par l'opérateur du service) ou peut résulter du déplacement d'un utilisateur dont la trajectoire est connue de l'opérateur du service.

L'ordinateur chiffre alors chaque composante $V'_i$ du vecteur V' pour obtenir le vecteur chiffré EV'.

La deuxième trajectoire peut également ne pas être connue de l'ordinateur et de l'opérateur du service : par exemple, l'ordinateur peut recevoir d'un équipement utilisateur des données chiffrées représentant la deuxième trajectoire. Ces données correspondent au chiffré du vecteur V', noté EV'. Ainsi, en l'absence des données V' représentant la deuxième trajectoire, l'opérateur du service utilisant les données chiffrées ne pourra pas identifier l'individu ayant produit les données représentant la deuxième trajectoire T'.

La comparaison pourra se faire relativement à une portion seulement de trajectoire ou à l'intégralité de la trajectoire. Par exemple, si la première trajectoire et la deuxième trajectoire ont le même point de départ et d'arrivée une comparaison de l'ensemble des trajectoires peut être réalisée. De même, la comparaison peut être effectuée sur une portion seulement d'une des trajectoires, par exemple lorsque les deux trajectoires ont un point en commun.

La première trajectoire T et la deuxième trajectoire T' peuvent avoir les mêmes points de départ et/ou les mêmes points d'arrivée et/ou un même point commun. Par deux trajectoires ayant le même point (de départ, d'arrivée, ou commun), il est entendu que les points, correspondant au point de départ, au point d'arrivée ou au point en commun, de chacune des deux trajectoires sont compris dans une même cellule, parmi un ensemble de plusieurs cellules recouvrant au moins une partie d'une zone géographique. Par exemple, l'ensemble de cellules peut former une partition spatiale de la zone géographique. Un maillage de la pluralité de cellules fin permet de mieux caractériser une trajectoire. Une cellule correspond à une sous-zone géographique de la zone géographique.

Plusieurs trajectoires peuvent également être comparées avec la deuxième trajectoire. Dans ce cas la possibilité d'identifier précisément l'individu au moyen de sa trajectoire est limitée.

Par vecteur chiffré, il est entendu un vecteur dont les composantes sont le résultat du chiffrement respectivement des composantes d'un autre vecteur. Le chiffrement est réalisé au moyen d'une clé qui peut être une clé privée, dans le cas d'un chiffrement symétrique, ou une clé publique, dans le cas d'un chiffrement asymétrique.

Par vecteur signature correspondant à une trajectoire, il est entendu un vecteur résultant de l'application d'une fonction de hachage sur un vecteur représentant la trajectoire. Le vecteur représentant la trajectoire peut être un vecteur chiffré (par exemple EV' et EV) ou non chiffré (par exemple V' et V).

Par vecteur (chiffré ou non) représentant une trajectoire, il est entendu un vecteur dont les éléments, si ceux-ci sont déchiffrés ou ne sont pas chiffrés, permettent de retracer plus ou moins précisément la trajectoire dont le vecteur est issu. Un vecteur représentant une trajectoire correspond aux données représentant la trajectoire.

Par comparaison de deux vecteurs signatures, il est entendu toute opération permettant de déterminer si les trajectoires dont les vecteurs signatures sont issus (c'est-à-dire les trajectoires représentées par des vecteurs dont le hachage a pour résultat les vecteurs signatures) sont similaires ou proches.

Par trajectoires similaires, il est entendu deux trajectoires (au moins pour la portion de ces trajectoires entre les points desquels la comparaison est effectuée) passant par les mêmes cellules (par exemple, dans le même ordre) de l'ensemble de cellules, les cellules de l'ensemble de cellules recouvrant une zone géographique (par exemple, formant une partition de cette zone géographique) à l'intérieur de laquelle se trouvent les deux trajectoires (au moins pour la portion de ces trajectoires concernée par la comparaison). Il est alors équivalent de dire que le résultat de la fonction D appliquée à deux vecteurs signatures représentant deux trajectoires similaires est un chiffré de 0.

Par trajectoires proches, il est entendu deux trajectoires passant par des cellules communes (par exemple, dans le même ordre), le nombre de cellules communes par rapport au nombre de cellules traversées par l'une des deux trajectoires étant supérieur à un seuil. Il est alors équivalent de dire que le résultat de la fonction D appliquée à deux vecteurs signatures représentant deux trajectoires proches est un chiffré d'une valeur inférieure à un seuil, noté $\eta$.

On peut définir un ensemble de transitions, dont chaque transition représente un passage d'une cellule de l'ensemble de cellules à une autre cellule de cet ensemble. On considère alors qu'une trajectoire passant d'une cellule à une autre cellule comprend alors la transition correspondant à ce passage. Un tel ensemble de transition peut contenir toutes les transitions possibles de chacune des cellules de l'ensemble de cellules vers chacune des autres cellules. Il peut également s'agir d'un sous-ensemble de cet ensemble. Cette autre cellule peut être une cellule adjacente. Il est également possible que cette autre cellule ne soit pas une cellule adjacente. En effet, des transitions entre cellules adjacentes peuvent ne pas être définies dans la trajectoire en raison par exemple d'une mauvaise couverture radio.

Ainsi, deux trajectoires similaires ont les mêmes transitions. Deux trajectoires proches ont un nombre de transitions communes, relativement au nombre total de transitions des trajectoires proches (par exemple, relativement au nombre total de transitions comprises dans la trajectoire ayant le plus de transitions parmi les deux trajectoires proches) ou de manière absolue, supérieur à un seuil prédéterminé.

Autrement dit, lorsque l'on définit la fonction D qui, à deux vecteurs EU et EU' associe une valeur chiffrée de d(U,U'), où U et U' sont deux vecteurs et EU et EU' sont respectivement les vecteurs chiffrés de U et U' et d est une distance, l'égalité entre deux vecteurs EU et EU' (c'est-à-dire que les trajectoires correspondant au deux vecteurs sont similaires) correspond à un résultat du calcul de D(EU,EU') qui correspond au chiffré de 0. De plus, deux vecteurs EU et EU' sont proches (c'est-à-dire que les trajectoires correspondant au deux vecteurs sont proches) lorsque le résultat du calcul de D(EU,EU') correspond au chiffré d'une valeur inférieure à un seuil, noté $\eta$.

Selon un mode de réalisation, il est prévu l'obtention du vecteur chiffré, EV, sur un équipement utilisateur puis la transmission à l'ordinateur du vecteur chiffré, EV.

Par équipement utilisateur, il est entendu tout équipement (par exemple téléphone, smartphone ou encore ordinateur portable) permettant d'obtenir des données représentant la trajectoire de l'utilisateur (par exemple, un équipement disposant d'une puce GPS), de chiffrer ces données et enfin de les transmettre à l'ordinateur. Plus généralement, l'équipement utilisateur peut être remplacé par plusieurs équipements réalisant une ou deux de ces trois fonctions, par exemple, un objet connecté comme une montre qui enregistre la trajectoire de l'utilisateur, les données relatives à la trajectoire pouvant ensuite être chargées sur un ordinateur pour être chiffrées, puis transmises à l'ordinateur. Il est également possible que l'équipement utilisateur ne réalise que la fonction d'enregistrement de la trajectoire et transmette les données relatives à la trajectoire (à savoir, V) à un serveur qui ensuite produit un vecteur chiffré (EV) et transmet ce vecteur chiffré à l'ordinateur. Le serveur se distingue alors du système de l'opérateur pour empêcher l'identification de l'utilisateur. La transmission des données relatives à la trajectoire (chiffrées ou non) peut être réalisée via tout réseau de communication, par exemple le réseau internet. Il est également possible que les données représentant la trajectoire de l'utilisateur soient obtenues de manière centralisée par un opérateur intermédiaire, par exemple directement par un opérateur de réseau qui peut géolocaliser l'équipement utilisateur. Cet opérateur intermédiaire peut également chiffrer ces données représentant la trajectoire et les transmettre à l'opérateur du service, c'est-à-dire à l'ordinateur pour réaliser la comparaison.

Selon un mode de réalisation $\alpha$ =1 et $\beta$ = n+1.

Ainsi, obtenir des vecteurs représentant les trajectoires, c'est-à-dire générer les données représentatives de la trajectoire, présente peu de complexité et ainsi requiert peu de capacité de calcul.

Selon un mode de réalisation, le chiffrement est obtenu au moyen d'une clé publique pk et d'une fonction de chiffrement, Encrypt( . ,pk), d'un schéma de calcul bipartite sécurisé (2PC).

La fonction de chiffrement associe, au moyen de la clé publique, une valeur réelle à une valeur chiffrée, c'est-à-dire un code qui requiert une clé privée pour être déchiffré.

Toutes les composantes des vecteurs chiffrés et toutes les valeurs chiffrées sont obtenues avec la même fonction de chiffrement. C'est-à-dire qu'un même schéma de chiffrement est utilisé.

Par schéma de calcul bipartite sécurisé (2PC), il est entendu un schéma de chiffrement qui permet à deux parties de calculer conjointement le résultat d'une fonction en utilisant leurs entrées respectives, de telle sorte que chaque partie n'obtient aucune information sur l'entrée de l'autre partie. Il peut s'agir d'un schéma employant un chiffrement probabiliste. L'emploi d'un tel schéma pour chiffrer les données relatives aux trajectoires permet de réaliser plus efficacement des opérations directement sur les données chiffrées (codes) sans connaitre la valeur réelle dont sont issues les données chiffrées. Ainsi, il est possible d'implémenter les fonctions suivantes :

- la fonction ScalarMult, qui au couple de valeur (Eu,u') associe une valeur égale à Encrypt(u.u',pk), où Eu est la valeur chiffrée de la valeur réelle u (à savoir, Eu = Encrypt(u.pk)) et u' est une valeur réelle non chiffrée ;
- la fonction Min, qui au h-uplet $\{Eu_i\}_{i\in[1,n]}$ associe une valeur Encrypt($\min_{i\in[1,n]}(u_i)$, pk), où $Eu_i$ est la valeur chiffrée de la i-ième valeur $u_i$ de l'ensemble $\{u_i\}_{i\in[1,n]}$ ;
- la fonction ArgMin, qui au h-uplet $\{Eu_i\}_{i\in[1,n]}$ associe une valeur Encrypt($\text{argmin}_{i\in[1,n]}(u_i)$, pk), où $Eu_i$ est la valeur chiffrée de la i-ième valeur $u_i$ de l'ensemble $\{u_i\}_{i\in[1,n]}$ ;
- la fonction Equal, qui au couple de vecteurs (EU,EU') associe une valeur Encrypt(1,pk) si U=U' et Encrypt(0,pk) si U≠U' où EU est le vecteur dont les éléments sont les éléments chiffrés de U et EU' est le vecteur dont les éléments sont les éléments chiffrés de U' ;
- la fonction Add, qui au couple (Eu, Eu') associe une valeur Encrypt(u+u',pk), où Eu et Eu' sont respectivement les valeurs chiffrées des valeurs réelles u et u' ;
- la fonction Less, qui au couple de valeurs chiffrées (Eu, Eu') associe une valeur Encrypt(1,pk), de 1 si u ≥ u' et une valeur de Encrypt(0,pk) sinon ; et
- la fonction Mult, qui au couple de valeurs chiffrées (Eu, Eu') associe une valeur Encrypt(u.u',pk) et où Eu et Eu' sont respectivement les valeurs chiffrées des valeurs u et u'.

Par une valeur chiffrée de A, Encrypt(A,pk), il est entendu l'une des valeurs qu'il est possible d'obtenir en chiffrant la valeur A avec la fonction Encrypt au moyen de la clé publique pk. Dans le cas d'un chiffrement probabiliste, plusieurs valeurs peuvent correspondre à Encrypt(A,pk), une valeur Encrypt(A,pk) est donc l'une d'entre elles. Il est parfois écrit Encrypt(A,pk ;r) où r est un aléa.

Selon un mode de réalisation les h composantes $Sig(EV)_{j\in[1,h]}$ résultant de l'application de la fonction, f, de hachage sur le vecteur chiffré, EV, correspondent respectivement au chiffré de la composante minimale d'un vecteur résultant du produit d'un vecteur V et d'un vecteur résultant de l'application sur un vecteur W= $(W_m)_{m\in[1;n]}$ d'une permutation comprise dans le sous-ensemble de h éléments. C'est-à-dire que pour chaque $j\in[1,h]$, $Sig(EV)_{j\in[1,h]}$ est la valeur chiffrée de $\min_{i\in[1,n]}(V_i.\pi_{j,i})$, où $EV_i$ est le chiffré de $V_i$ et $\pi_{j,i}$ est la valeur de la i-ième composante du vecteur résultant de l'application sur le vecteur W= (1, 2,...,n) de la j-ième permutation comprise dans le sous-ensemble de h éléments. C'est-à-dire que le résultat Sig(EV) de la fonction f de hachage est définie par :

$$Sig(EV)=f(EV)=[Min_{i\in[1,n]}(ScalarMult(EV_i, \pi_{j,i}))]_{j\in[1,h]}.$$

Ainsi, toutes les composantes de Sig(EV) sont obtenues en appliquant les mêmes opérations avec h permutations différentes. La fonction de hachage permet alors une comparaison plus efficiente des trajectoires tout en conservant une bonne précision de celle-ci.

Selon un mode de réalisation il est prévu la détermination par l'ordinateur du vecteur signature Sig(EV'), celui-ci correspondant à la deuxième trajectoire T', la i-ème composante du vecteur signature Sig(EV') étant déterminée par calcul de la valeur chiffrée de $\min_{i\in[1,n]}(V'_i, \pi_{j,i})$, où, $\pi_{j,i}$ est la valeur d'une i-ième composante du vecteur résultant de l'application sur le vecteur W d'une j-ième permutation comprise dans le sous-ensemble de h éléments et $(V'_i)_{i\in[1,n]}$ sont les composantes d'un vecteur V' représentatif de la deuxième trajectoire T', la i-ème composante $V'_i$ du vecteur V' = $(V'_i)_{i\in[1,n]}$ étant égale à :

- la valeur réelle α lorsque la deuxième trajectoire T' comprend la i-ème transition de l'ensemble de n transitions ; ou
- la valeur réelle β lorsque la deuxième trajectoire T' ne comprend pas la i-ème transition de l'ensemble de transitions.

Ainsi, l'ordinateur calcule pour chaque i, la valeur de $\min_{i\in[1,n]}(V'_i, \pi_{j,i})$ à partir du vecteur V'. Chacune de ces valeurs est ensuite chiffrée pour obtenir les composantes de Sig(EV') et permettre la comparaison entre Sig(EV) et Sig(EV'), c'est-à-dire d'effectuer la comparaison des trajectoires T' et T dans le domaine chiffré. Dans ce cas la trajectoire T' est connue de l'ordinateur. La trajectoire T' peut ainsi être choisie de manière pertinente en fonction de la connaissance de la zone géographique. Lorsque T' est déterminée ou choisie on parle alors de trajectoire de référence. Ainsi, lorsque plusieurs trajectoires inconnues de l'opérateur du service (comme la première trajectoire) sont comparées à une trajectoire de référence, il est par exemple possible à l'opérateur du service d'évaluer le nombre d'individus qui empruntent cette trajectoire. Il est également possible de déterminer le nombre d'individus qui empruntent des trajectoires très proches ou similaires.

Le deuxième vecteur signature, Sig(EV'), peut également être obtenu en chiffrant le vecteur V' pour obtenir le vecteur chiffré EV' et en appliquant la fonction f de hachage, on retrouve alors : $\text{Sig}(EV')=f(EV')=[\text{Min}_{i\in[1,n]}(\text{Scalar-Mult}(EV'_{i},\ \pi_{j,i}))]_{j\in[1,h]}$.

Selon un mode de réalisation il est prévu la détermination par l'ordinateur du deuxième vecteur signature Sig(EV'), déterminé par application de la fonction, f, de hachage sur un vecteur chiffré, EV', de sorte qu'au moins une k-ième composante du deuxième vecteur signature correspond au chiffré de la composante minimale d'un vecteur résultant du produit d'un vecteur V' et du vecteur résultant de l'application sur le vecteur W de la k-ième permutation comprise dans le sous-ensemble de h éléments, le vecteur chiffré, EV', étant le résultat du chiffrement d'un vecteur V' représentant la deuxième trajectoire T', la i-ème composante $V'_i$ du vecteur $V' = (V'_i)_{i\in[1,n]}$ étant égale à :

- la valeur réelle $\alpha$ lorsque la trajectoire T' comprend la i-ème transition de l'ensemble de n transitions ; ou
- la valeur réelle $\beta$ lorsque la trajectoire T' ne comprend pas la i-ème transition de l'ensemble de transitions.

Ainsi, l'ordinateur applique la fonction f de hachage sur le vecteur chiffré EV', afin d'obtenir les h composantes $\text{Sig}(EV')_{j\in[1,h]}$ du deuxième vecteur signature Sig(EV'). Le vecteur EV' est le chiffré du vecteur V' représentant la trajectoire T'. L'ordinateur peut obtenir le vecteur chiffré EV' de la même manière que le vecteur EV (par exemple, suite au chiffrement et à la transmission du vecteur EV' par un équipement utilisateur). Ainsi, l'ordinateur et l'opérateur du service n'ont que des données chiffrées représentant la trajectoire T'. Ainsi ils ne peuvent pas identifier l'individu dont les données représentant la trajectoire T' sont issues. L'ordinateur compare alors Sig(EV) et Sig(EV'), c'est-à-dire qu'il effectue la comparaison des trajectoires T et T' dans le domaine chiffré sans connaitre les trajectoires T et T'. Ainsi, lorsque plusieurs trajectoires inconnues de l'opérateur du service sont comparées entre elles, il est par exemple possible à l'opérateur du service d'évaluer des éventuelles congestions de trafic dans une zone géographique donnée sans qu'aucune trajectoire ne soit connue de l'opérateur du service. Pour cela l'opérateur du service peut déchiffrer le résultat de la comparaison mais pas les données relatives aux trajectoires comparées. Pour garantir que l'opérateur du service ne puisse pas déchiffrer les données relatives aux trajectoires, il est également possible de transmettre à un opérateur tiers le résultat chiffré de la comparaison ou d'un éventuel décompte, l'opérateur tiers étant alors chargé de déchiffrer ces résultats et de transmettre ces résultats déchiffrés à l'opérateur du service. L'opérateur du service ne disposant pas de la clé privée permettant de déchiffrer les données relatives aux trajectoires, il est ainsi garanti que celui-ci ne pourra pas obtenir ces données de manière non chiffrée mais seulement le résultat de la comparaison ou d'un éventuel décompte. L'opérateur tiers peut éventuellement être un utilisateur du service, ainsi l'utilisateur via le service pourra, par exemple connaitre le nombre d'utilisateurs qui empruntent une même trajectoire sans qu'il ait été nécessaire à un autre opérateur de manipuler des données non chiffrées relatives aux trajectoires.

L'opération de comparaison peut être réalisée avec plusieurs trajectoires, par exemple, comparer plusieurs trajectoires qui ne sont pas connues de l'opérateur du service entre elles ou avec une ou plusieurs d'un ensemble de trajectoires de référence.

Selon un mode de réalisation il est prévu un ajout de la première trajectoire T à un groupe de trajectoires correspondant à la deuxième trajectoire T' en fonction du résultat de la comparaison.

Ainsi, en fonction du résultat de la comparaison entre Sig(EV) et Sig(EV'), par exemple si les deux trajectoires T et T' sont considérées comme similaires ou proches, la première trajectoire T est ajoutée dans un groupe de trajectoires correspondant à la deuxième trajectoire.

Par groupe de trajectoires correspondant à la deuxième trajectoire, il est entendu un ensemble de trajectoires similaires ou proches de la deuxième trajectoire T'. Les trajectoires du groupe de trajectoires correspondant à la deuxième trajectoire peuvent avoir été ajoutées au groupe de la même manière que la première trajectoire T. La deuxième trajectoire T' est alors la représentante du groupe de trajectoires correspondant à la deuxième trajectoire.

Selon un mode de réalisation il est prévu de comparer N trajectoires $(T^l)_{l\in[1,N]}$ avec la deuxième trajectoire T' au moyen de la comparaison de chacun des N vecteurs signatures déterminés $(\text{Sig}(EV^l))_{l\in[i,N]}$ avec le deuxième vecteur signature Sig(EV'), la méthode comprenant en outre un décompte d'un nombre de trajectoires comprises dans le groupe de trajectoires correspondant à la deuxième trajectoire T' parmi les N trajectoires, le décompte comprenant le calcul d'une valeur chiffrée du nombre, ecount[N], de trajectoires comprises dans le groupe de trajectoires correspondant à la deuxième trajectoire T' parmi les N trajectoires.

Les vecteurs signatures déterminés $(\text{Sig}(EV^l))_{l\in[1,N]}$ sont obtenus de la même manière que le premier vecteur signature Sig(EV), par exemple, par application de la fonction f de hachage sur chacun des N vecteurs $EV^l$. Chacun des vecteurs obtenus est alors comparé avec Sig(EV'), c'est-à-dire que chacune des N trajectoires $(T^l)_{l\in[1,N]}$ est comparée dans le domaine chiffré à la deuxième trajectoire T'. En fonction du résultat chiffré de la comparaison entre Sig(EV') et chacun des $\text{Sig}(EV^l)_l$, par exemple si les trajectoires $T^l$ et T' sont considérées comme similaires ou proches, la trajectoire $T^l$ est ajoutée dans le groupe de trajectoires correspondant à la deuxième trajectoire T'. Ensuite, un décompte du nombre de trajectoires dans le groupe de trajectoires correspondant à la deuxième trajectoire T' est effectué dans le domaine chiffré. Ainsi, le décompte étant effectué sans déchiffrer le résultat de la comparaison, le nombre de trajectoires dans un groupe peut donc être calculé sans que l'opérateur du service ne puisse le déduire. Le déchiffrement du résultat du décompte, à savoir ecount[N], peut alors être fait par un autre opérateur autorisé (par exemple l'opérateur tiers) ou par l'ordinateur. Pour cela, l'anonymisation des utilisateurs (ceux dont sont issues les $(T^l)_{l \in [1,N]}$ trajectoires) doit être garantie, par exemple, si l'on peut assurer que le nombre de trajectoires dans le groupe dénombré est nécessairement important, empêchant ainsi de déduire l'identité des utilisateurs.

Lorsque plusieurs groupes correspondant à des trajectoires différentes sont considérés, chaque trajectoire $T^l$ est comparée avec chaque représentant de chacun de ces différents groupes. Dans ce cas une trajectoire $T_l$ est ajoutée à un groupe si la trajectoire $T^l$ est égale ou plus proche (selon la distance d appliquée sur le vecteur représentant $T^l$ et le vecteur représentant la trajectoire représentante du groupe) du représentant du groupe que des autres représentants.

Selon un mode de réalisation le calcul de la valeur chiffrée du nombre, ecount[N], de trajectoires comprises dans le groupe de trajectoires correspondant à la deuxième trajectoire T' comprend le calcul de :

$$Ecount[k]=Add(ecount[k-1], Equal(Sig(EV^k),Sig(EV')))$$

où, ecount[k] est la valeur chiffrée d'un nombre de trajectoires décomptées dans le groupe de trajectoires correspondant à la deuxième trajectoire T' parmi les trajectoires $(T^l)_{l \in [1,k]}$.

Ainsi, on assure que le décompte soit effectué sans déchiffrer le résultat de la comparaison ni les valeurs intermédiaires du décompte, à savoir ecount[k], qui restent chiffrés. Le nombre de trajectoires dans un groupe ne peut donc pas être déduit par l'opérateur du service.

Selon un mode de réalisation le décompte du nombre de trajectoires comprend l'application d'une fonction de seuil S sur la valeur chiffrée ecount[N] du nombre de trajectoires parmi les N trajectoires qui sont comprises dans le groupe de trajectoires correspondant à la deuxième trajectoire T', la fonction S associant a une valeur chiffrée Eu la valeur chiffrée Eu lorsque u est supérieur à un seuil $\mu$ supérieur ou égal à 2 et la valeur chiffrée d'une valeur réelle strictement inférieure à $\mu$ sinon, où Eu est la valeur chiffrée de la valeur réelle u.

Ainsi, le résultat de la fonction de seuil est une valeur chiffrée qui n'est pas représentative du nombre de trajectoires dans un groupe correspondant à la deuxième trajectoire lorsque ce nombre est inférieur à un seuil u. Ainsi, si le nombre de trajectoires décomptées est inférieur au seuil $\mu$, il n'est pas possible d'obtenir la valeur du nombre de trajectoires dans le groupe. Savoir qu'un groupe correspondant à une trajectoire comprend un nombre très faible de trajectoires peut permettre d'identifier l'individu à l'origine des données relatives à l'une des trajectoires du groupe. En effet, comme précédemment mentionné, si le groupe comprend par exemple une seule trajectoire proche voire similaire à la trajectoire représentative, alors il est possible de déterminer des lieux significatifs de la vie de l'individu et éventuellement d'identifier cet individu. Si le groupe comprend de nombreuses trajectoires alors il devient impossible ou au moins plus difficile d'identifier un individu via la trajectoire représentative de ce groupe. Ainsi, la fonction de seuil empêche de pouvoir obtenir la valeur, même chiffrée, du nombre de trajectoires dans un groupe comprenant trop peu de trajectoires et ainsi elle empêche de pouvoir identifier des individus de ce groupe.

La fonction de seuil peut être définie par : S(Eu) = Mult(Less(Eu,$\mu$), Eu).

Selon un mode de réalisation il est prévu en outre le déchiffrement du résultat S(Encount[N]) de la fonction seuil S appliquée sur la valeur chiffrée Ecount[N].

Le déchiffrement du résultat S(Encount[N]) peut être réalisé par un autre opérateur (par exemple, l'opérateur tiers), mais également par l'opérateur du service car la fonction de seuil S permet de garantir l'anonymisation des utilisateurs (ceux dont sont issues les $(T_l)_{l \in [1,N]}$ trajectoires) lorsque $\mu$ est choisi suffisamment grand.

Selon un autre aspect, il est proposé un programme informatique comportant des instructions pour la mise en oeuvre de tout ou partie d'un procédé tel que défini dans les présentes lorsque ces instructions sont exécutées par un processeur. Selon un autre aspect de l'invention, il est proposé un support d'enregistrement non transitoire, lisible par un ordinateur, sur lequel est enregistré un tel programme.

Selon un autre aspect, il est proposé un ordinateur configuré pour comparer une première trajectoire T avec une deuxième trajectoire, les trajectoires T et T' étant au moins pour partie incluses dans une zone géographique, la zone géographique étant recouverte par un ensemble de cellules, l'ordinateur comprenant :

un processeur ; et
une mémoire stockant des instructions, de sorte que lorsque ces instructions sont exécutées par le processeur, elles configurent le terminal utilisateur pour:

- déterminer un premier vecteur signature, Sig(EV), par application d'une fonction, f, de hachage sur un vecteur chiffré, EV, de sorte qu'au moins une k-ième composante du vecteur signature correspond au chiffré de la composante minimale d'un vecteur résultant du produit d'un vecteur V et d'un vecteur résultant de l'application sur le vecteur $(1, 2,..., n)$ d'une k-ième permutation comprise dans un sous-ensemble de h éléments de l'ensemble des permutations de n valeurs, le vecteur chiffré, EV, étant le résultat du chiffrement du vecteur V représentant la trajectoire T, la i-ème composante $V_i$ du vecteur $V = (V_i)_{i \in [i,n]}$ étant :

- de valeur réelle $\alpha$ strictement positive, lorsque la trajectoire T comprend une i-ème transition d'un ensemble de n transitions, chaque transition de l'ensemble de transitions représentant une transition d'une cellule de la zone géographique à une autre cellule de la zone géographique ;
- de valeur réelle $\beta$ strictement positive avec $n.\alpha < \beta$, lorsque la trajectoire T ne comprend pas la i-ème transition de l'ensemble de transitions ;

- comparer Sig(EV) avec un deuxième vecteur signature Sig(EV'), la comparaison comprenant l'application d'une fonction D qui, à deux vecteurs EU et EU' associe une valeur chiffrée de d(U,U'), où U et U' sont deux vecteurs et EU et EU' sont respectivement les vecteurs chiffrés de U et U' et d est une distance, le deuxième vecteur signature Sig(EV') correspondant à la deuxième trajectoire T'.

D'autres caractéristiques, détails et avantages de l'invention apparaîtront à la lecture de la description détaillée ci-après, et à l'analyse des dessins annexés, sur lesquels :

- la figure 1 illustre la comparaison de trajectoires selon un mode de réalisation particulier ;

- la figure 2 illustre un ordinogramme représentant le procédé selon un mode de réalisation particulier.

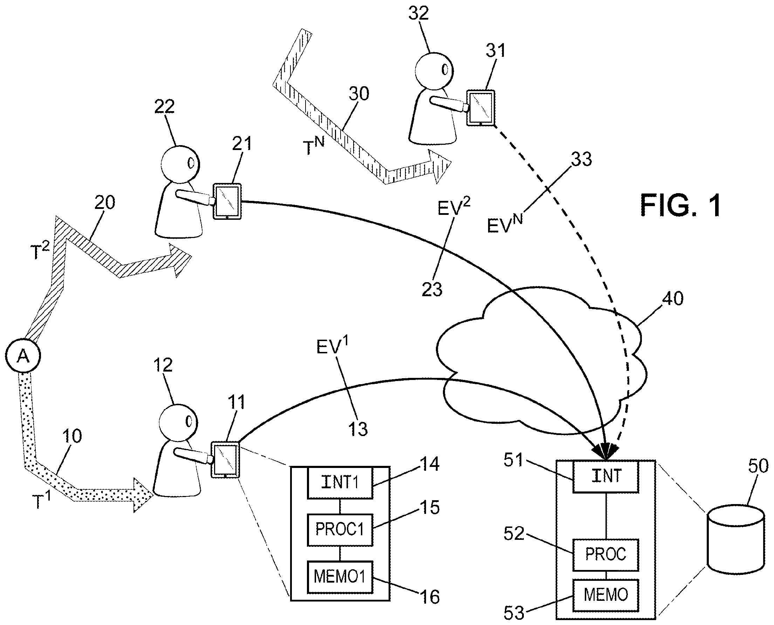

L'exemple de la figure 1 décrit un ensemble d'utilisateurs 12, 22 et 32 disposant de terminaux utilisateur 11, 21 et 31. Le terminal utilisateur 11 est plus amplement décrit. Le terminal utilisateur 11 comprend un module d'interface avec le réseau de communication (INT1) 14, un processeur (PROC1) 15 et une mémoire (MEMO1) 16. Le processeur 15 est configuré pour déterminer les données (par exemple, le vecteur $V^1$ représentant la trajectoire $T^1$) relatives à la trajectoire géographique 10. Le processeur 15 est configuré pour chiffrer ces données pour obtenir le vecteur chiffré $EV^1$. Le processeur 15 est en outre configuré pour contrôler le module d'interface avec le réseau de communication (INT1) 14 afin de pouvoir transmettre le vecteur chiffré $EV^1$ 13 à un ordinateur 50 (par exemple, un serveur de l'opérateur du service) via le réseau de communication 40, par exemple le réseau Internet.
Le module d'interface avec le réseau de communication (INT1) 14 permet au terminal utilisateur 11 de transmettre le vecteur chiffré $EV^1$ 13 via le réseau de communication 40. Il peut s'agir d'un modem internet et/ou d'une carte réseau pour un ordinateur ou encore d'un module de communication sans fil permettant de coder et de transmettre un signal radio provenant d'une antenne du réseau de communication 40.
La mémoire 16 comprend une mémoire non volatile sur laquelle est stocké le programme informatique et une mémoire volatile sur laquelle sont stockés les paramètres pour la mise en oeuvre du procédé proposé, par exemple, le vecteur $V^1$ représentant la trajectoire $T^1$, des données relatives à un découpage d'une zone géographique en cellules, des données relatives à des associations entre des couples de cellules et les transitions correspondantes d'un ensemble de n transitions $(t_i)_{i \in [1,n]}$ et une clé publique.
Les terminaux utilisateur 11, 21 et 31 peuvent être par exemple des ordinateurs, smartphones ou encore des tablettes numériques. Les données relatives aux trajectoires géographiques 10, 20 et 30 peuvent être obtenues par les terminaux utilisateur 11, 21 et 31 par toutes techniques permettant de géolocaliser un terminal utilisateur dans une zone géographique, par exemple, via un système de géolocalisation par satellite comme le GPS ou encore par un système de géolocalisation non satellitaire, par exemple par triangulation de signaux d'un réseau de télécommunication radio. Dans cet exemple, N vecteurs chiffrés $EV^1$ à $EV^N$ sont transmis à l'ordinateur 50, les utilisateurs produisant les vecteurs chiffrés $EV^3$ à $EV^{N-1}$ ne sont pas représentés sur la figure 1.
L'ordinateur 50 comprend un module d'interface avec le réseau de communication (INT) 51, un processeur (PROC) 52 et une mémoire (MEMO) 53.
La mémoire 53 comprend une mémoire non volatile sur laquelle est stocké le programme informatique et une mémoire volatile sur laquelle sont stockés les paramètres pour la mise en oeuvre de l'invention, par exemple, les vecteurs chiffrés $EV^1$ à $EV^N$, les vecteurs signatures des trajectoires de références, le résultat d'une comparaison entre vecteurs signatures, les fonctions f, D, Ecount et S, etc.
Le module d'interface avec le réseau de communication (INT) 51 permet à l'ordinateur 50 de recevoir les vecteurs chiffrés $EV^1$ 13 à $EV^N$ 33 via le réseau de communication 40. Il peut s'agir d'un modem internet et/ou d'une carte réseau pour un ordinateur ou encore d'un module de communication sans fil permettant de recevoir et de décoder un signal radio provenant d'une antenne du réseau de communication 40.
Le processeur 52 est notamment configuré pour contrôler le module d'interface avec le réseau de communication (INT) 51 afin de pouvoir recevoir les vecteurs chiffrés $EV^1$ 13 à $EV^N$ 33 via le réseau 40 et éventuellement d'envoyer via le réseau de communication 40 le résultat d'une comparaison de vecteurs signatures ou le résultat d'un décompte Ecount(N) ou encore S(Ecount(N)). Le processeur 52 est également configuré pour déterminer les N vecteurs signatures, $(Sig(EV)^l)_{l \in [1,N]}$, à partir des N vecteurs chiffrés $EV^1$ à $EV^N$. Le processeur 52 est configuré pour comparer les N vecteurs signatures, $(Sig(EV)^l)_{l \in [i,N]}$, entre eux ou avec d'autres vecteurs signatures relatifs à des trajectoires de référence $TR^{p \in [1,P]}$. Le processeur 52 est configuré pour calculer Ecount(N) ou encore S(Ecount(N)).

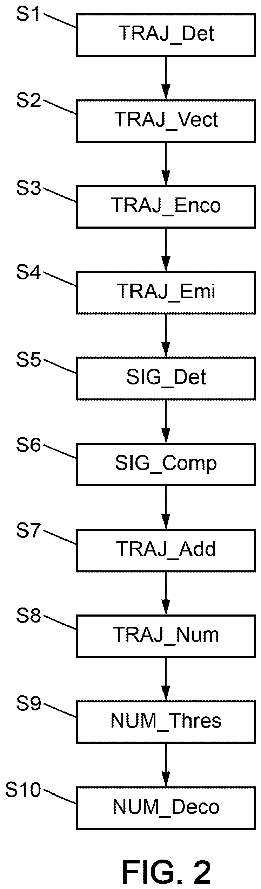

La figure 2 représente un organigramme d'un procédé selon un mode de réalisation particulier.

A l'étape S1, chaque terminal utilisateur 11, 21 et 31 détermine respectivement les trajectoires $T^1$, $T^2$ et $T^N$. Pour cela le processeur 15 du terminal utilisateur 11 peut, en fonction de données GPS et des données relatives à un découpage d'une zone géographique en cellules, déterminer à chaque moment dans quelle cellule le terminal utilisateur 11 se situe. Sur la base des données relatives à des associations entre des couples de cellules et les transitions correspondantes, à chaque changement de cellule le processeur 15 détermine la transition correspondante au changement de cellule. Chaque transition correspond au passage d'une cellule à une autre, c'est-à-dire que chaque transition correspond à un couple de cellules (par exemple $(C_1,C_2)$) et à une direction de passage (par exemple de $C_1$ vers $C_2$). Ainsi pour chaque couple de cellules $(C_1, C_2)$, deux transitions sont possibles, à savoir la transition de $C_1$ vers $C_2$ et de $C_2$ vers $C_1$.

A l'étape S2, chaque terminal utilisateur 11, 21 et 31 détermine respectivement les vecteurs $V^1$, $V^2$ et $V^N$ représentant chaque trajectoire $T^1$, $T^2$ et $T^N$. Le processeur 15 du terminal utilisateur 11 détermine la i-ème composante $V^1i$ du vecteur $V^1$ comme étant égale à :

- à la valeur réelle $\alpha$, par exemple « 1 » lorsque la trajectoire $T^1$ comprend la i-ème transition $t_i$ de l'ensemble de n transitions;
- à la valeur réelle $\beta$, par exemple « 1+n » lorsque la trajectoire $T^1$ ne comprend pas la i-ème transition $t_i$ de l'ensemble de transitions.

Il est rappelé que les valeurs réelles $\alpha$ et $\beta$ sont strictement positives et sont choisies telles que $n.\alpha < \beta$.

A l'étape S3, chaque terminal utilisateur 11, 21 et 31 chiffre les composantes des vecteurs $V^1$, $V^2$ et $V^N$ pour obtenir les vecteurs chiffrés $EV^1$, $EV^2$ et $EV^N$. Ainsi, le processeur 15 du terminal utilisateur 11 détermine la i-ème composante $EV^1_i$ du vecteur $EV^1$ comme étant égale à Encrypt($V^1_i$,pk). La fonction Encrypt est une fonction de chiffrement qui peut être celle d'un schéma de calcul bipartite sécurisé (2PC) et a minima un schéma de chiffrement permettant de définir les fonctions suivantes :

- la fonction ScalarMult, qui au couple de valeur (Eu,u') associe une valeur égale à Encrypt(u.u',pk), où Eu est la valeur chiffrée de la valeur réelle u (à savoir, Eu = Encrypt(u.pk)) et u' est une valeur réelle non chiffrée ;
- la fonction Min, qui au h-uplet $\{Eu_i\}_{i \in [1,n]}$ associe une valeur Encrypt($\min_{i \in [1,n]}(u_i)$, pk), où $Eu_i$ est la valeur chiffrée de la i-ième valeur $u_i$ de l'ensemble $\{u_i\}_{i \in [1,n]}$ ;
- la fonction ArgMin, qui au h-uplet $\{Eu_i\}_{i \in [1,n]}$ associe une valeur Encrypt($\text{argmin}_{i \in [1,n]}(u_i)$, pk), où $Eu_i$ est la valeur chiffrée de la i-ième valeur $u_i$ de l'ensemble $\{u_i\}_{i \in [1,n]}$ ;
- la fonction Equal, qui au couple de vecteurs (EU,EU') associe une valeur Encrypt(1,pk) si U=U' et Encrypt(0,pk) si U≠U' où EU est le vecteur dont les éléments sont les éléments chiffrés de U et EU' est le vecteur dont les éléments sont les éléments chiffrés de U' ;
- la fonction Add, qui au couple (Eu, Eu') associe une valeur Encrypt(u+u',pk), où Eu et Eu' sont respectivement les valeurs chiffrées des valeurs réelles u et u' ;
- la fonction Less, qui au couple de valeurs chiffrées (Eu, Eu') associe une valeur Encrypt(1,pk), de 1 si u ≥ u' et une valeur de Encrypt(0,pk) sinon ; et
- la fonction Mult, qui au couple de valeurs chiffrées (Eu, Eu') associe une valeur Encrypt(u.u',pk) et où Eu et Eu' sont respectivement les valeurs chiffrées des valeurs u et u'.

A l'étape S4, chaque terminal utilisateur 11, 21 et 31 envoie respectivement les vecteurs $EV^1$, $EV^2$ et $EV^N$, via le réseau internet 40, à l'ordinateur 50 qui les réceptionne via son module d'interface avec le réseau de communication (INT) 51.

Les étapes S1 à S4 peuvent également être effectuées par un opérateur intermédiaire, par exemple un opérateur d'un réseau de communication qui peut géolocaliser les différents terminaux utilisateurs 11, 21 et 31, par exemple, en identifiant dans quelle cellule du réseau de l'opérateur se trouve chaque terminal utilisateur. Les cellules du réseau de l'opérateur de réseau peuvent dans ce cas correspondre aux cellules de la zone géographique. Une fois que les trajectoires $T^1$, $T^2$ et $T^N$ sont déterminées par l'opérateur intermédiaire, celui-ci peut déterminer les vecteurs $V^1$, $V^2$ et $V^N$. Ensuite l'opérateur intermédiaire peut transmettre les vecteurs chiffrés $EV^1$, $EV^2$ et $EV^N$ à l'ordinateur 50.

A l'étape S5, le processeur 52 de l'ordinateur 50 détermine pour chaque vecteur chiffré $EV^1$, $EV^2$ et $EV^N$ un

vecteur signature Sig(EV$^1$), Sig(EV$^2$) et Sig(EV$^N$). Au moins une j-ième composante du Sig(EV') correspond au chiffré de la composante minimale du vecteur résultant du produit du vecteur EV$^l$ et du vecteur résultant de l'application sur un vecteur W= (W$_m$)$_{m \in [1;n]}$ de la k-ième permutation comprise dans un sous-ensemble de h éléments. La j-ième composante Sig(EV$^l$)$_j$ du vecteur Sig(EV') étant déterminée par f(EV') = Min$_{i \in [1,n]}$(ScalarMult(EV$^l_i$, $\pi_{j,i}$)), où $\pi_{j,i}$ est la valeur de la i-ième composante du vecteur résultant de l'application sur le vecteur (1, 2,...,n) d'une j-ième permutation comprise dans un sous-ensemble de h éléments de l'ensemble des permutations de n valeurs. Chaque vecteur Sig(EV') comprend un nombre de composantes égal au nombre de permutations comprises dans le sous-ensemble de h éléments. Sig(EV') comprend donc h composantes. Le nombre h est compris entre 1 et n!. Plus h est élevé plus la comparaison du vecteur Sig(EV') avec un autre vecteur signature sera précise, mais plus la comparaison requiert des ressources de calcul ; inversement plus h est faible, moins la comparaison requiert des ressources de calcul, mais moins la comparaison du vecteur Sig(EV') avec un autre vecteur signature sera précise.

A l'étape S6, le processeur 52 de l'ordinateur 50 compare chacun des N vecteurs signatures Sig(EV') avec un autre vecteur signature.

L'autre vecteur signature peut être un vecteur signature (également dénommé vecteur signature de référence) déterminé sur la base d'un vecteur représentant une trajectoire de référence. Par exemple, une trajectoire générée par l'ordinateur ou par l'opérateur du service en fonction de critères géographiques ou stratégiques selon des techniques connues. Plus généralement, chacun des N vecteurs signatures Sig(EV') est comparé avec un ensemble de P vecteurs signatures de référence. Ces P vecteurs signatures de référence peuvent être déterminés en appliquant la fonction f respectivement sur chacun des vecteurs chiffrés représentant les trajectoires de référence (TR$^p$)$_{p \in [1,P]}$. De manière équivalente, ces P vecteurs signatures, peuvent être déterminés en chiffrant le vecteur résultant de l'application de la fonction MinHash sur les vecteurs non chiffrés représentant les trajectoires de référence. Le MinHash(U) étant égale à (min($\pi_1$.U), min($\pi_2$.U),..., min($\pi_h$.U)), où $\pi_j$ est le vecteur résultant de l'application sur le vecteur (1, 2,...,n) de la j-ième permutation comprise dans le sous-ensemble de h éléments de l'ensemble des permutations de n valeurs et U est un vecteur non chiffré. La fonction MinHash est plus amplement discutée dans le document « A Comparison of Hash-Based Methods for Trajectory Clustering" de M. Rayatidamavandi et al. publié dans les actes de le conférence IEEE 2017 Int. Conf. 15th Intl Conf on Dependable, Autonomie and Secure Computing.

. Dans ce cas la comparaison consiste à déterminer la valeur chiffrée de la fonction D(Sig(EV$^l$),Sig(EVR$^p$)), qui correspond à la valeur chiffrée de d(V$^l$,VR$^p$), où VR$^p$ est le vecteur représentant la trajectoire de référence TR$^p$.

Il est également possible de comparer les N vecteurs signatures Sig(EV') les uns avec les autres. La comparaison consiste également à déterminer la valeur chiffrée de la fonction D(Sig(EV$^l$),Sig(EV$^m$)), qui correspond à la valeur chiffrée de d(V$^l$,V$^m$), avec le couple (l,m)$\in [1,N]^2$ et l#m.

Dans les deux cas, il est également possible de se restreindre à déterminer si deux vecteurs signatures correspondent à des trajectoires similaires ou non, c'est-à-dire si D(Sig(EV$^l$),Sig(EVR$^p$)) ou D(Sig(EV$^l$),Sig(EV$^m$)), correspond à la valeur chiffrée Encrypt (0,pk) ou non.

A l'étape S7, le processeur 52 de l'ordinateur 50 ajoute chacun des N vecteurs signatures Sig(EV') à l'un des groupes de trajectoires en fonction du résultat de la comparaison.

Lorsque les N vecteurs signatures Sig(EV') sont comparés avec les vecteurs signatures de référence (Sig(EVR$^p$))$_{p \in [1,P]}$, alors la trajectoire T' est ajoutée dans le groupe de trajectoires correspondant à la trajectoire de référence avec laquelle T' est la plus proche, c'est-à-dire la trajectoire TRP' de référence telle que la valeur D(Sig(EV$^l$),Sig(EVR$^{p'}$)) correspond à la valeur chiffrée du d(V$^l$,VR$^{p'}$) le plus faible parmi les d(V$^l$,VR$^p$)$_{p \in [1,P]}$. Autrement dit, T' est ajouté au groupe correspondant à la trajectoire de référence TR$^{p'}$ ou p' = argmin(d(V$^l$,VR$^p$)$_{p \in [1,P]}$). C'est-à-dire qu'il est calculé la valeur chiffrée de la fonction ArgMin$_{i \in [1,p]}$(D(Sig(EV'),Sig(EVR$^p$)).

Lorsque les N vecteurs signatures Sig(EV') sont comparés les uns avec les autres, il est possible de créer des groupes de trajectoires correspondant aux trajectoires ayant un voisinage dense : c'est-à-dire le plus de trajectoires parmi les (T$^l$)$_{l \in [1,N]}$ dans leur entourage, par exemple, à une distance d autour d'elles. C'est-à-dire, que les groupes auxquels sont ajoutées les trajectoires (T$^l$)$_{l \in [1,N]}$, sont les groupes correspondant à des trajectoires (T'$^l$)$_{l \in \Sigma}$ (avec T'$^l$ = T' si l$\in \Sigma$ et $\Sigma$ sous ensemble de [1,N]) qui sont telles que les cardinaux des groupes {V$^l$ / d(V$^l$,V$^q$)<$\rho$, l$\in [1,N]$}, avec q$\in \Sigma$, sont tous supérieurs aux cardinaux des groupes {V$^l$/ d(V$^l$,V$^r$)<$\rho$, l$\in [1,N]$, r $\in [1,N]\backslash\Sigma$}, avec $\rho$ réel strictement supérieur à 0 et permettant de distinguer les différentes trajectoires (T$^l$)$_{l \in [1,N]}$. Les trajectoires (T'$^l$)$_{l \in \Sigma}$ peuvent être déterminées dans le domaine chiffré, c'est-à-dire sans déchiffrer les vecteurs (EV$^l$)$_{l \in [1,N]}$. Une fois les trajectoires (T'$^l$)$_{l \in \Sigma}$ déterminées, les trajectoires (T$^l$)$_{l \in [1,N]}$ sont ajoutées aux groupes correspondant respectivement aux (T'$^l$)$_{l \in \Sigma}$ de la même manière que dans le cas des trajectoires de référence TR$^{p'}$.

Dans ces deux cas, il est également possible d'ajouter la trajectoire T$^l$ au groupe pour lequel la trajectoire (que celle-ci soit de référence ou non) correspondant au groupe est proche de T$^l$, c'est-à-dire que D(Sig(EV$^l$),Sig(EVR$^p$)) ou D(Sig(EV$^l$),Sig(EV$^m$)) correspond à des valeurs chiffrées de valeurs plus petites que $\eta$.

A l'étape S8, le processeur 52 de l'ordinateur 50 décompte dans le domaine chiffré le nombre de trajectoires parmi les N trajectoires $(T^l)_{l\in[1,N]}$ qui sont dans chaque groupe correspondant aux trajectoires de référence ou aux trajectoires $(T'^l)_{l\in\Sigma}$ suivant le cas de figure.

Dans le cas où l'on se restreint à déterminer si deux vecteurs signatures correspondent à des trajectoires similaires ou non, c'est-à-dire si $D(Sig(EV^l),Sig(EVR^p))$ ou $D(Sig(EV^l),Sig(EV^m))$, correspond à la valeur chiffrée Encrypt $(0,pk)$ ou non, alors le décompte peut être effectué en calculant:

- pour chaque groupe, c'est-à-dire pour chaque $p\in[1,P]$, $Ecount^p[N]$, en calculant par itération $Ecount[k]=Add(ecount[k-1], Equal(Sig(EV^k), Sig(EVRP)))$; ou
- pour chaque groupe, c'est-à-dire pour chaque $l\in\Sigma$, $Ecount'[N]$, en calculant par itération $Ecount[k]=Add(ecount[k-1], Equal(Sig(EV^k),Sig(EV^l)))$.

Dans le cas où les trajectoires sont comparées avec les trajectoires de référence, les calculs de l'étape S8 peuvent prendre en compte l'étape de comparaison S6 et l'étape d'ajout S7, ainsi, ces étapes sont optionnelles.

Lorsqu'on ne se retreint pas à déterminer si deux vecteurs signatures correspondent à des trajectoires similaires ou non, par exemple, si l'on détermine si $D(Sig(EV^l),Sig(EVR^p))$ ou $D(Sig(EV^l),Sig(EV^m))$ correspond à des valeurs chiffrées de valeurs plus petites que $\eta$, alors le décompte peut être effectué en calculant:

- pour chaque groupe, c'est-à-dire pour chaque $p\in[1,P]$, $Ecount^p[N]$, en calculant par itération $Ecount^p[k]=Add[ecount^p[k-1];Equal(Less(Encrypt(\eta,pk),D(Sig(EV^k),Sig(EVR^p)),Encrypt(1,pk))]$;
- pour chaque groupe, c'est-à-dire pour chaque $l\in\Sigma$, $Ecount'[N]$, en calculant $Ecount^l[k]=Add[ecount^l[k-1];Equal(Less(Encrypt(\eta,pk),D(Sig(EV^k),Sig(EV^l)),Encrypt(1,pk))]$ par itération.

A l'étape S9, le processeur 52 de l'ordinateur 50 calcule pour chaque groupe, le résultat de la fonction S appliquée sur le résultat de l'étape de décompte S8, c'est-à-dire :

- pour chaque $p\in[1,P]$, la valeur chiffrée $S(Encount^p[N])$, ou
- pour chaque $l\in\Sigma$, la valeur chiffrée $S(Encount^l[N])$.

La fonction S associe à une valeur chiffrée Eu la valeur chiffrée Eu lorsque u est supérieur à un seuil $\mu$, par exemple 5, et une valeur Encrypt(0,pk) sinon, où Eu est la valeur chiffrée de la valeur réelle u.

Cette étape peut être optionnelle, notamment lorsque le résultat du décompte n'est pas déchiffré par l'opérateur du service et/ou l'ordinateur. De plus, d'autres techniques peuvent être implémentées afin de garantir l'anonymisation des utilisateurs 12, 22 et 32.

A l'étape S10, le résultat du décompte est déchiffré. Lorsque le déchiffrage est réalisé par l'opérateur du service, alors l'étape S9 peut être réalisée pour garantir l'anonymisation des utilisateurs 12, 22 et 32. Dans ce cas le processeur 52 de l'ordinateur 50 déchiffre le résultat de la fonction seuil obtenu à l'étape S9, c'est-à-dire :

- pour chaque $p\in[1,P]$, l'ordinateur déchiffre $S(Encount^p[N])$, ou
- pour chaque $l\in\Sigma$, l'ordinateur déchiffre $S(Encount^l[N])$.

Lorsque le déchiffrage n'est pas réalisé par l'opérateur du service, l'ordinateur transmet les valeurs chiffrées $(Encount^p[N])_{p\in[1,P]}$ ou $S(Encount^p[N])_{p\in[1,P]}$ ou les valeurs chiffrées $(Encount^l[N])_{l\in\Sigma}$ ou $S(Encount^l[N])_{l\in\Sigma}$. Ces valeurs chiffrées sont ensuite déchiffrées par un tiers opérateur, par exemple, un opérateur autorisé par les utilisateurs à traiter des données sensibles, et notamment leurs données représentant leur trajectoire 10, 20 et 30.

Pour déchiffrer ces valeurs chiffrées, une clé privée est utilisée, conformément aux techniques de chiffrement asymétrique.

## Revendications

1. Méthode de comparaison d'une première trajectoire T avec une deuxième trajectoire T', les trajectoires T et T' étant au moins pour partie incluses dans une zone géographique, la zone géographique étant recouverte par un ensemble de cellules, la méthode étant mise en oeuvre par un ordinateur et comprenant:

   - une détermination d'un premier vecteur signature, Sig(EV), déterminé par application d'une fonction, f, de hachage sur un vecteur chiffré, EV, de sorte qu'au moins une k-ième composante du premier vecteur signature correspond au chiffré de la composante minimale d'un vecteur résultant du produit d'un vecteur V et d'un vecteur résultant de l'application sur un vecteur $W= (W_m)_{m\in[1;n]}$ d'une k-ième permutation comprise dans un sous-ensemble de h éléments de l'ensemble des permutations de n valeurs, où $W_m$ est égale à m et le vecteur chiffré, EV, étant le résultat du chiffrement du vecteur V représentant la trajectoire T, la i-ème composante $V_i$ du vecteur $V = (V_i)_{i\in[i,n]}$ étant :

- de valeur réelle $\alpha$ strictement positive, lorsque la trajectoire T comprend une i-ème transition d'un ensemble de n transitions, chaque transition de l'ensemble de transitions représentant une transition d'une cellule de la zone géographique à une autre cellule de la zone géographique ;
- de valeur réelle $\beta$ strictement positive avec $n.\alpha < \beta$, lorsque la trajectoire T ne comprend pas la i-ème transition de l'ensemble de transitions ;

- une comparaison de Sig(EV) avec un deuxième vecteur signature Sig(EV'), la comparaison comprenant l'application d'une fonction D qui, à deux vecteurs EU' et EU" associe une valeur chiffrée de d(U',U"), où U' et U" sont deux vecteurs et EU' et EU" sont respectivement les vecteurs chiffrés de U' et U" et d est une distance, le deuxième vecteur signature Sig(EV') correspondant à la deuxième trajectoire T'.

2. Méthode selon la revendication 1, comprenant en outre l'obtention du vecteur chiffré, EV sur un équipement utilisateur puis la transmission à l'ordinateur du vecteur chiffré, EV.

3. Méthode selon l'une des revendications précédentes dans laquelle $\alpha = 1$ et $\beta = n+1$.

4. Méthode selon l'une des revendications précédentes dans laquelle le chiffrement est obtenu au moyen d'une clé publique pk et d'une fonction de chiffrement, Encrypt( . ,pk), d'un schéma de calcul bipartite sécurisé, 2PC.

5. Méthode selon l'une des revendications précédentes dans laquelle la fonction f de hachage est définie par :

$$f(EV)=[Min_{i\in[1,n]}(ScalarMult(EV_i, \pi_{j,i}))]_{j\in[1,h]} ;$$

où, $\pi_{j,i}$ est la valeur d'une i-ième composante du vecteur résultant de l'application sur le vecteur (1, 2,...,n) d'une j-ième permutation comprise dans un sous-ensemble de h éléments de l'ensemble des permutations de n valeurs, où la fonction ScalarMult associe au couple de valeurs (Ex,a) une valeur chiffrée de a.x, où Ex est la valeur chiffrée de la valeur réelle x, et la fonction Min associe au h-uplet de valeurs chiffrées $\{Ex_i\}_{i\in[1,n]}$ une valeur chiffrée de min $_{i\in[4,n]}(x_i)$, où $Ex_i$ est la valeur chiffrée de $x_i$.

6. Méthode selon l'une des revendications précédentes comprenant en outre la détermination par l'ordinateur du vecteur signature Sig(EV') correspondant à la deuxième trajectoire T', la i-ème composante du vecteur signature Sig(EV') étant déterminée par calcul de la valeur chiffrée de $min_{i\in[1,n]}(V'_i, \pi_{j,i})$, où, $\pi_{j,i}$ est la valeur d'une i-ième composante du vecteur résultant de l'application sur le vecteur W d'une j-ième permutation comprise dans le sous-ensemble de h éléments et $(V'_i)_{i\in[1,n]}$ sont les composantes d'un vecteur V' représentatif de la deuxième trajectoire T', la i-ème composante $V'_i$ du vecteur $V' = (V'_i)_{i\in[1,n]}$ étant égale à :

- la valeur réelle $\alpha$ lorsque la deuxième trajectoire T' comprend la i-ème transition de l'ensemble de n transitions ; ou
- la valeur réelle $\beta$ lorsque la deuxième trajectoire T' ne comprend pas la i-ème transition de l'ensemble de transitions.

7. Méthode selon l'une des revendications 1 à 5 comprenant en outre la détermination par l'ordinateur du deuxième vecteur signature Sig(EV'), déterminé par application de la fonction, f, de hachage sur un vecteur chiffré, EV', de sorte qu'au moins une k-ième composante du deuxième vecteur signature correspond au chiffré de la composante minimale d'un vecteur résultant du produit d'un vecteur V' et du vecteur résultant de l'application sur le vecteur W de la k-ième permutation comprise dans le sous-ensemble de h éléments, le vecteur chiffré, EV', étant le résultat du chiffrement d'un vecteur V' représentant la deuxième trajectoire T', la i-ème composante $V'_i$ du vecteur $V' = (V'_i)_{i\in[1,n]}$ étant égale à :

- la valeur réelle $\alpha$ lorsque la trajectoire T' comprend la i-ème transition de l'ensemble de n transitions ; ou
- la valeur réelle $\beta$ lorsque la trajectoire T' ne comprend pas la i-ème transition de l'ensemble de transitions.

8. Méthode selon l'une des revendications précédentes comprend en outre un ajout de la première trajectoire T à un groupe de trajectoires correspondant à la deuxième trajectoire T' en fonction du résultat de la comparaison.

9. Méthode selon la revendication 8 dans laquelle N trajectoires $(T^l)_{l \in [1,N]}$ sont chacune comparée avec la deuxième trajectoire T' au moyen de la comparaison de chacun de N vecteurs signatures déterminés $(Sig(EV^l))_{l \in [1,N]}$ avec le deuxième vecteur signature Sig(EV'), la méthode comprenant en outre un décompte d'un nombre de trajectoires comprises dans le groupe de trajectoires correspondant à la deuxième trajectoire T' parmi les N trajectoires, le décompte comprenant le calcul d'une valeur chiffrée du nombre, ecount[N], de trajectoires comprises dans le groupe de trajectoires correspondant à la deuxième trajectoire T' parmi les N trajectoires.

10. Méthode selon la revendication 9 dans laquelle le calcul de la valeur chiffrée du nombre, ecount[N], de trajectoires comprises dans le groupe de trajectoires correspondant à la deuxième trajectoire T' comprend le calcul de :

$$Ecount[k]=Add(ecount[k-1], Equal(Sig(EV^k),Sig(EV'))) ;$$

où, ecount[k] est la valeur chiffrée d'un nombre de trajectoires décomptées dans le groupe de trajectoires correspondant à la deuxième trajectoire T' parmi les trajectoires $(T^l)_{l \in [1,k]}$, la fonction Add associe au couple de valeurs chiffrées (Ev', Ev") une valeur chiffrée de v'+v", où Ev' et Ev" sont respectivement les valeurs chiffrées des valeurs v' et v" et la fonction Equal associe au couple de vecteurs (EU',EU") une valeur chiffré de 1 si U'=U" et une valeur chiffrée de 0 si U'≠ U" où EU' est le vecteur dont les composantes sont les éléments chiffrés de U' et EU" est le vecteur dont les composantes sont les éléments chiffrés de U".

11. Méthode selon l'une des revendications 9 ou 10 dans laquelle le décompte du nombre de trajectoires comprend l'application d'une fonction de seuil s sur la valeur chiffrée ecount[N] du nombre de trajectoires parmi les N trajectoires qui sont comprises dans le groupe de trajectoires correspondant à la deuxième trajectoire T', la fonction s associant a une valeur chiffrée Eu la valeur chiffrée Eu lorsque u est supérieur à un seuil $\mu$ supérieur ou égal à 2 et la valeur chiffrée d'une valeur réelle strictement inférieure à $\mu$ sinon, où Eu est la valeur chiffrée de la valeur réelle u.

12. Méthode selon la revendication 11 dans laquelle la fonction de seuil s est la fonction définie par:

$$S(Eu) = Mult(Less(Eu,\mu), Eu) ;$$

où la fonction Less associe au couple de valeurs chiffrées (Eu, Eu') une valeur chiffrée de 1 si u ≥ u' et 0 sinon et la fonction Mult associe au couple de valeurs chiffrées (Eu, Eu') une valeur chiffrée de u.u' et où Eu et Eu' sont respectivement les valeurs chiffrées des valeurs u et u'.

13. Méthode selon l'une quelconque des revendications 11 à 12 comprenant en outre le déchiffrement du résultat de la fonction seuil s appliquée sur la valeur chiffrée ecount[N].

14. Programme informatique comportant des instructions pour la mise en oeuvre de la méthode selon l'une des revendications précédentes, lorsque ces instructions sont exécutées par un processeur.

15. Ordinateur configuré pour comparer une première trajectoire T avec une deuxième trajectoire, les trajectoires T et T' étant au moins pour partie incluses dans une zone géographique, la zone géographique étant recouverte par un ensemble de cellules, l'ordinateur comprenant :

un processeur ; et
une mémoire stockant des instructions, de sorte que lorsque ces instructions sont exécutées par le processeur, elles configurent le terminal utilisateur pour:

- déterminer un premier vecteur signature, Sig(EV), par application d'une fonction, f, de hachage sur un vecteur chiffré, EV, de sorte qu'au moins une k-ième composante du vecteur signature correspond au chiffré de la composante minimale d'un vecteur résultant du produit d'un vecteur V et d'un vecteur résultant de l'application sur le vecteur (1, 2,...,n) d'une k-ième permutation comprise dans un sous-ensemble de h éléments de l'ensemble des permutations de n valeurs, le vecteur chiffré, EV, étant le résultat du chiffrement du vecteur V représentant la trajectoire T, la i-ème composante $V_i$ du vecteur $V = (V_i)_{i \in [i,n]}$ étant :

- de valeur réelle α strictement positive, lorsque la trajectoire T comprend une i-ème transition d'un ensemble de n transitions, chaque transition de l'ensemble de transitions représentant une transition d'une cellule de la zone géographique à une autre cellule de la zone géographique ;
- de valeur réelle β strictement positive avec n.α< β, lorsque la trajectoire T ne comprend pas la i-ème transition de l'ensemble de transitions ;

- comparer Sig(EV) avec un deuxième vecteur signature Sig(EV'), la comparaison comprenant l'application d'une fonction D qui, à deux vecteurs EU' et EU" associe une valeur chiffrée de d(U',U"), où U' et U" sont deux vecteurs et EU' et EU" sont respectivement les vecteurs chiffrés de U' et U" et d est une distance, le deuxième vecteur signature Sig(EV') correspondant à la deuxième trajectoire T'.

**Patentansprüche**

1. Verfahren zum Vergleichen einer ersten Trajektorie T mit einer zweiten Trajektorie T', wobei die Trajektorien T und T' mindestens zum Teil in einem geografischen Gebiet enthalten sind, wobei das geografische Gebiet durch eine Menge von Zellen abgedeckt wird, wobei das Verfahren von einem Computer ausgeführt wird und umfasst:

- ein Bestimmen eines ersten Signaturvektors Sig(EV), der durch Anwenden einer Hashfunktion f auf einen verschlüsselten Vektor EV bestimmt wird, so dass mindestens eine k-te Komponente des ersten Signaturvektors dem Chiffrat der minimalen Komponente eines Vektors entspricht, der aus dem Produkt aus einem Vektor V und aus einem Vektor resultiert, der aus der Anwendung auf einen Vektor $W=(W_m)_{m\in[i;n]}$ einer k-ten Permutation resultiert, die in einer Teilmenge von h Elementen der Menge der Permutationen von n Werten enthalten ist, wobei $W_m$ gleich m ist, und wobei der verschlüsselte Vektor EV das Ergebnis der Verschlüsselung des Vektors V ist, der die Trajektorie T repräsentiert, wobei die i-te Komponente $V_i$ des Vektors $V = (V_i)_{i\in[i,n]}$ Folgendes ist:

- ein strikt positiver realer Wert α, wenn die Trajektorie T eine i-te Transition einer Menge von n Transitionen umfasst, wobei jede Transition der Menge von Transitionen eine Transition von einer Zelle des geografischen Gebiets zu einer anderen Zelle des geografischen Gebiets repräsentiert;
- ein strikt positiver realer Wert β mit n.α< β, wenn die Trajektorie T die i-te Transition der Menge von Transitionen nicht umfasst;

- ein Vergleichen von Sig(EV) mit einem zweiten Signaturvektor Sig(EV'), wobei das Vergleichen die Anwendung einer Funktion D umfasst, die zwei Vektoren EU' und EU" einen verschlüsselten Wert von d(U',U") zuordnet, wobei U' und U" zwei Vektoren sind und EU' und EU" die verschlüsselten Vektoren von U' beziehungsweise U" sind und d eine Entfernung ist, wobei der zweite Signaturvektor Sig(EV') der zweiten Trajektorie T' entspricht.

2. Verfahren nach Anspruch 1, umfassend ferner das Erhalten des verschlüsselten Vektors EV auf einer Benutzereinrichtung, dann die Übertragung des verschlüsselten Vektors EV an den Computer.

3. Verfahren nach einem der vorhergehenden Ansprüche, wobei α =1 und β = n+1.

4. Verfahren nach einem der vorhergehenden Ansprüche, wobei die Verschlüsselung mittels eines öffentlichen Schlüssels pk und einer Verschlüsselungsfunktion Encrypt( . ,pk) eines sicheren Zwei-Parteien-Berechnungsschemas 2PC erhalten wird.

5. Verfahren nach einem der vorhergehenden Ansprüche, wobei die Hashfunktion f definiert ist durch:

$$f(EV) = [Min_{i\in[1,n]}(ScalarMult(EV_i, \pi_{j,i}))]_{j\in[1,h]};$$

wobei $\pi_{j,i}$ der Wert einer i-ten Komponente des Vektors ist, der aus der Anwendung auf den Vektor (1, 2, ...,n) einer j-ten Permutation resultiert, die in einer Teilmenge von h Elementen der Menge der Permutationen von n Werten enthalten ist, wobei die Funktion ScalarMult dem Wertepaar (Ex,a) einen verschlüsselten Wert von a.x zuordnet, wobei Ex der verschlüsselte Wert des realen Werts x ist, und die Funktion Min dem h-Tupel von verschlüsselten Werten $\{Ex_i\}_{i\in[1,n]}$ einen verschlüsselten Wert von $\min_{i\in[1,n]}(x_i)$ zuordnet, wobei $Ex_i$ der verschlüsselte Wert von $x_i$ ist.

6. Verfahren nach einem der vorhergehenden Ansprüche, umfassend ferner das Bestimmen durch den Computer des Signaturvektors Sig(EV'), der der zweiten Trajektorie T' entspricht, wobei die i-te Komponente des Signaturvektors Sig(EV') durch Berechnen des verschlüsselten Werts von $\min_{i \in [1,n]}(V'_i, \pi_{j,i})$ bestimmt wird, wobei $\pi_{j,i}$ der Wert einer i-ten Komponente des Vektors ist, der aus der Anwendung auf den Vektor W einer j-ten Permutation resultiert, die in der Teilmenge von h Elementen enthalten ist, und $(V'_i)_{i \in [1,n]}$ die Komponenten eines Vektors V' sind, der repräsentativ für die zweite Trajektorie T' ist, wobei die i-te Komponente $V'_i$ des Vektors $V' = (V'_i)_{i \in [1,n]}$ gleich Folgendem ist:

- dem realen Wert $\alpha$, wenn die zweite Trajektorie T' die i-te Transition der Menge von n Transitionen umfasst; oder
- dem realen Wert $\beta$, wenn die zweite Trajektorie T' die i-te Transition der Menge von Transitionen nicht umfasst.

7. Verfahren nach einem der Ansprüche 1 bis 5, umfassend ferner das Bestimmen durch den Computer des zweiten Signaturvektors Sig(EV'), der durch Anwenden der Hashfunktion f auf einen verschlüsselten Vektor EV' bestimmt wird, so dass mindestens eine k-te Komponente des zweiten Signaturvektors dem Chiffrat der minimalen Komponente eines Vektors entspricht, der aus dem Produkt aus einem Vektor V' und aus dem Vektor resultiert, der aus der Anwendung auf den Vektor W der k-ten Permutation resultiert, die in der Teilmenge von h Elementen enthalten ist, wobei der verschlüsselte Vektor EV' das Ergebnis der Verschlüsselung eines Vektors V' ist, der die zweite Trajektorie T' repräsentiert, wobei die i-te Komponente $V'_i$ des Vektors $V' = (V'_i)_{i \in [1,n]}$ gleich Folgendem ist:

- dem realen Wert $\alpha$, wenn die Trajektorie T' die i-te Transition der Menge von n Transitionen umfasst; oder
- dem realen Wert $\beta$, wenn die Trajektorie T' die i-te Transition der Menge von Transitionen nicht umfasst.

8. Verfahren nach einem der vorhergehenden Ansprüche, umfassend ferner ein Hinzufügen der ersten Trajektorie T zu einer Gruppe von Trajektorien, die der zweiten Trajektorie T' entsprechen, in Abhängigkeit von dem Ergebnis des Vergleichs.

9. Verfahren nach Anspruch 8, wobei N Trajektorien $(T^l)_{l \in [1,N]}$ jeweils mit der zweiten Trajektorie T' verglichen werden mittels des Vergleichens von jedem von N bestimmten Signaturvektoren $(Sig(EV^l))_{l \in [1,N]}$ mit dem zweiten Signaturvektor Sig(EV'), wobei das Verfahren ferner ein Zählen einer Anzahl von Trajektorien umfasst, die in der Gruppe von Trajektorien enthalten sind, die der zweiten Trajektorie T' unter den N Trajektorien entsprechen, wobei das Zählen das Berechnen eines verschlüsselten Werts der Anzahl ecount[N] von Trajektorien umfasst, die in der Gruppe von Trajektorien enthalten sind, die der zweiten Trajektorie T' unter den N Trajektorien entsprechen.

10. Verfahren nach Anspruch 9, wobei das Berechnen des verschlüsselten Werts ecount[N] von Trajektorien, die in der Gruppe von Trajektorien enthalten sind, die der zweiten Trajektorie T' entsprechen, das Berechnen umfasst von:

```
Ecount[k]=Add(ecount[k-1], Equal(Sig(EVᵏ),Sig(EV')));
```

wobei ecount[k] der verschlüsselte Wert einer Anzahl von gezählten Trajektorien in der Gruppe von Trajektorien ist, die der zweiten Trajektorie T' unter den Trajektorien $(T^l)_{l \in [1,k]}$ entsprechen, wobei die Funktion Add dem Paar von verschlüsselten Werten (Ev', Ev") einen verschlüsselten Wert von v'+v" zuordnet, wobei Ev' und Ev" die verschlüsselten Werte der Werte v' beziehungsweise v" sind, und die Funktion Equal dem Paar von Vektoren (EU',EU") einen verschlüsselten Wert von 1 zuordnet, wenn U'=U", und einen verschlüsselten Wert von 0, wenn U' $\neq$ U", wobei EU' der Vektor ist, dessen Komponenten die verschlüsselten Elemente von U' sind, und EU" der Vektor ist, dessen Komponenten die verschlüsselten Elemente von U" sind.

11. Verfahren nach einem der Ansprüche 9 oder 10, wobei das Zählen der Anzahl von Trajektorien die Anwendung einer Schwellenwertfunktion s auf den verschlüsselten Wert ecount[N] der Anzahl von Trajektorien unter den N Trajektorien umfasst, die in der Gruppe von Trajektorien enthalten sind, die der zweiten Trajektorie T' entsprechen, wobei die Funktion s einem verschlüsselten Wert Eu den verschlüsselten Wert Eu zuordnet, wenn u größer als ein Schwellenwert $\mu$ größer oder gleich 2 ist, und ansonsten den verschlüsselten Werts eines realen Werts strikt kleiner als $\mu$, wobei Eu der verschlüsselte Wert des realen Werts u ist.

12. Verfahren nach Anspruch 11, wobei die Schwellenwertfunktion s die Funktion ist, die definiert wird durch:

```
S(Eu) = Mult(Less(Eu,µ), Eu);
```

wobei die Funktion Less dem Paar von verschlüsselten Werten (Eu, Eu') einen verschlüsselten Wert von 1 zuordnet, wenn u ≥ u', und ansonsten 0 und die Funktion Mult dem Paar von verschlüsselten Werten (Eu, Eu') einen verschlüsselten Wert von u.u' zuordnet und wobei Eu und Eu' die verschlüsselten Werte der Werte u beziehungsweise u' sind.

13. Verfahren nach einem der Ansprüche 11 bis 12, umfassend ferner das Entschlüsseln des Ergebnisses der auf den verschlüsselten Wert ecount[N] angewandten Schwellenwertfunktion s.

14. Computerprogramm mit Anweisungen, die bei der Ausführung dieser Anweisungen durch einen Prozessor das Verfahren nach einem der vorhergehenden Ansprüche ausführen.

15. Computer, der dazu konfiguriert ist, eine erste Trajektorie T mit einer zweiten Trajektorie T' zu vergleichen, wobei die Trajektorien T und T' mindestens zum Teil in einem geografischen Gebiet enthalten sind, wobei das geografische Gebiet durch eine Menge von Zellen abgedeckt wird, wobei der Computer umfasst:

einen Prozessor; und
einen Speicher, der Anweisungen speichert, so dass diese Anweisungen, wenn sie von dem Prozessor ausgeführt werden, das Benutzerendgerät dazu konfigurieren:

- einen ersten Signaturvektors Sig(EV) durch Anwenden einer Hashfunktion f auf einen verschlüsselten Vektor EV zu bestimmen, so dass mindestens eine k-te Komponente des ersten Signaturvektors dem Chiffrat der minimalen Komponente eines Vektors entspricht, der aus dem Produkt aus einem Vektors V und aus einem Vektor resultiert, der aus der Anwendung auf den Vektor (1, 2,...,n) einer k-ten Permutation resultiert, die in einer Teilmenge von h Elementen der Menge der Permutationen von n Werten enthalten ist, wobei der verschlüsselte Vektor EV das Ergebnis der Verschlüsselung des Vektors V ist, der die Trajektorie T repräsentiert, wobei die i-te Komponente $V_i$ des Vektors $V = (V_i)_{i \in [i,n]}$ Folgendes ist:

- ein strikt positiver realer Wert $\alpha$, wenn die Trajektorie T eine i-te Transition einer Menge von n Transitionen umfasst, wobei jede Transition der Menge von Transitionen eine Transition von einer Zelle des geografischen Gebiets zu einer anderen Zelle des geografischen Gebiets repräsentiert;
- ein strikt positiver realer Wert $\beta$ mit $n.\alpha < \beta$, wenn die Trajektorie T die i-te Transition der Menge von Transitionen nicht umfasst;

- Sig(EV) mit einem zweiten Signaturvektor Sig(EV') zu vergleichen, wobei das Vergleichen die Anwendung einer Funktion D umfasst, die zwei Vektoren EU' und EU" einen verschlüsselten Wert von d(U',U") zuordnet, wobei U' und U" zwei Vektoren sind und EU' und EU" die verschlüsselten Vektoren von U' beziehungsweise U" sind und d eine Entfernung ist, wobei der zweite Signaturvektor Sig(EV') der zweiten Trajektorie T' entspricht.

**Claims**

1. Method for comparing a first path T with a second path T', the paths T and T' being at least partly included in a geographical area, the geographical area being covered by a set of cells, the method being implemented by a computer and comprising:

- determining a first signature vector, Sig(EV), determined by applying a hash function, f, to an encrypted vector, EV, so that at least a k-th component of the first signature vector corresponds to the cipher of the minimum component of a vector resulting from the multiplication of a vector V and of a vector resulting from the application to a vector $W = (W_m)_{m \in [1;n]}$ of a k-th permutation contained in a subset of h elements of the set of permutations of n values, where $W_m$ is equal to m and the encrypted vector, EV, being the result of the encryption of the vector V representing the path T, the i-th component $V_i$ of the vector $V = (V_i)_{i \in [1,n]}$ being:

- of strictly positive real value $\alpha$, when the path T comprises an i-th transition of a set of n transitions, each transition of the set of transitions representing a transition from one cell of the geographical area to another cell of the geographical area;
- of strictly positive real value $\beta$ with $n.\alpha < \beta$, when the path T does not contain the i-th transition of the set of transitions;

- comparing Sig(EV) with a second signature vector Sig(EV'), the comparison comprising applying a function D that, with two vectors EU' and EU", associates an encrypted value of d(U',U"), where U' and U" are two vectors and EU' and EU" are the encrypted vectors of U' and U", respectively, and d is a distance, the second signature vector Sig(EV') corresponding to the second path T'.

2. Method according to Claim 1, further comprising obtaining the encrypted vector, EV, on a user equipment and then transmitting the encrypted vector, EV, to the computer.

3. Method according to either of the preceding claims, wherein $\alpha = 1$ and $\beta = n+1$.

4. Method according to one of the preceding claims, wherein the encryption is obtained by means of a public key pk and of an encryption function, Encrypt( . ,pk), of a secure two-party computation scheme, 2PC.

5. Method according to one of the preceding claims, wherein the hash function f is defined by:

$$f(EV) = [Min_{i \in [1,n]}(ScalarMult(EV_i, \pi_{j,i}))]_{j \in [1,h]};$$

where $\pi_{j,i}$ is the value of an i-th component of the vector resulting from the application, to the vector (1, 2,...,n), of a j-th permutation contained in a subset of h elements of the set of permutations of n values, where the function ScalarMult associates, with the pair of values (Ex,a), an encrypted value of a.x, where Ex is the encrypted value of the real value x, and the function Min associates, with the h-tuple of encrypted values $\{Ex_i\}_{i \in [1,n]}$, an encrypted value of $min_{i \in [i,n]}(x_i)$, where $Ex_i$ is the encrypted value of $x_i$.

6. Method according to one of the preceding claims, further comprising determining, by means of the computer, the signature vector Sig(EV') corresponding to the second path T', the i-th component of the signature vector Sig(EV') being determined by computing the encrypted value of $min_{i \in [1,n]}(V'_i, \pi_{j,i})$, where, $\pi_{j,i}$ is the value of an i-th component of the vector resulting from the application to the vector W of a j-th permutation contained in the subset of h elements and $(V'_i)_{i \in [1,n]}$ are the components of a vector V' representative of the second path T', the i-th component $V'_i$ of the vector V' = $(V'_i)_{i \in [1,n]}$ being equal to:

- the real value $\alpha$ when the second path T' comprises the i-th transition of the set of n transitions; or
- the real value $\beta$ when the second path T' does not contain the i-th transition of the set of transitions.

7. Method according to one of Claims 1 to 5, further comprising determining, by means of the computer, the second signature vector Sig(EV'), determined by applying the hash function, f, to an encrypted vector, EV', so that at least a k-th component of the second signature vector corresponds to the cipher of the minimum component of a vector resulting from the multiplication of a vector V' and of the vector resulting from the application to the vector W of the k-th permutation contained in the subset of h elements, the encrypted vector, EV', being the result of the encryption of a vector V' representing the second path T', the i-th component $V'_i$ of the vector V' = $(V'_i)_{i \in [1,n]}$ being equal to:

- the real value $\alpha$ when the path T' comprises the i-th transition of the set of n transitions; or
- the real value $\beta$ when the path T' does not contain the i-th transition of the set of transitions.

8. Method according to one of the preceding claims, further comprising adding the first path T to a group of paths corresponding to the second path T' depending on the result of the comparison.

9. Method according to Claim 8, wherein N paths $(T^l)_{l \in [1,N]}$ are each compared with the second path T' by comparing each of N determined signature vectors $(Sig (EV^l))_{l \in [1,N]}$ with the second signature vector Sig(EV'), the method further comprising counting a number of paths contained in the group of paths corresponding to the second path T' among the N paths, the counting comprising computing an encrypted value, ecount[N], of the number of paths contained in the group of paths corresponding to the second path T' among the N paths.

10. Method according to Claim 9, wherein computing the encrypted value, ecount[N], of the number of paths contained in the group of paths corresponding to the second path T' comprises computing:

$$Ecount[k] = Add(ecount[k-1], Equal(Sig(EV^k),Sig(EV')));$$

where ecount[k] is the encrypted value of a number of paths counted in the group of paths corresponding to the second path T' among the paths $(T^I)_{I\in[1,k]}$, the function Add associates, with the pair of encrypted values (Ev', Ev"), an encrypted value of v'+v", where Ev' and Ev" are the encrypted values of the values v' and v", respectively, and the function Equal associates, with the pair of vectors (EU',EU"), an encrypted value of 1 if U' = U" and an encrypted value of 0 if U' ≠ U", where EU' is the vector the components of which are the encrypted elements of U', and EU" is the vector the components of which are the encrypted elements of U".

11. Method according to one of Claims 9 and 10, wherein counting the number of paths comprises applying a threshold function s to the encrypted value ecount[N] of the number of paths among the N paths that are contained in the group of paths corresponding to the second path T', the function s associating, with an encrypted value Eu, the encrypted value Eu when u is greater than a threshold $\mu$ greater than or equal to 2 and the encrypted value of a real value strictly less than $\mu$, otherwise, where Eu is the encrypted value of the real value u.

12. Method according to Claim 11, wherein the threshold function s is the function defined by:

$$S(Eu) = Mult(Less(Eu,\mu), Eu);$$

where the function Less associates, with the pair of encrypted values (Eu, Eu'), an encrypted value of 1 if u ≥ u' and of 0 otherwise, and the function Mult associates, with the pair of encrypted values (Eu, Eu'), an encrypted value of u.u', and where Eu and Eu' are the encrypted values of u and u', respectively.

13. Method according to either one of Claims 11 and 12, further comprising decrypting the result of the threshold function s applied to the encrypted value ecount[N].

14. Computer program comprising instructions for implementing the method according to any of the preceding claims, when these instructions are executed by a processor.

15. Computer configured to compare a first path T with a second path, the paths T and T' being at least partly included in a geographical area, the geographical area being covered by a set of cells, the computer comprising:

   a processor; and
   a memory storing instructions, so that when these instructions are executed by the processor, they configure the user terminal to:

   - determine a first signature vector, Sig(EV), by applying a hash function, f, to an encrypted vector, EV, so that at least a k-th component of the signature vector corresponds to the cipher of the minimum component of a vector resulting from the multiplication of a vector V and of a vector resulting from the application to the vector (1, 2,...,n) of a k-th permutation contained in a subset of h elements of the set of permutations of n values, the encrypted vector, EV, being the result of the encryption of the vector V representing the path T, the i-th component $V_i$ of the vector $V = (V_i)_{i\in[1,n]}$ being:

      - of strictly positive real value $\alpha$, when the path T comprises an i-th transition of a set of n transitions, each transition of the set of transitions representing a transition from one cell of the geographical area to another cell of the geographical area;
      - of strictly positive real value $\beta$ with n.$\alpha$ < $\beta$, when the path T does not contain the i-th transition of the set of transitions;

   - compare Sig(EV) with a second signature vector Sig(EV'), the comparison comprising applying a function D that, with two vectors EU' and EU", associates an encrypted value of d(U',U"), where U' and U" are two vectors and EU' and EU" are the encrypted vectors of U' and U", respectively, and d is a distance, the second signature vector Sig(EV') corresponding to the second path T'.

FIG. 1

EP 4 158 924 B1

**FIG. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3640946 A1

**Littérature non-brevet citée dans la description**

- **LI WEI.** Incentive Mechanism Design for Crowdsourcing-based Indoor Localization. *IEEE ACCESS*

- **M. RAYATIDAMAVANDI et al.** A Comparison of Hash-Based Methods for Trajectory Clustering. *IEEE 2017 Int. Conf. 15th Intl Conf on Dependable, Autonomie and Secure Computing*